# EUROPÄISCHE PATENTSCHRIFT

(11) **EP 0 560 315 B1**
(45) Veröffentlichungstag und Bekanntmachung des Hinweises auf die Patenterteilung: **02.01.1997**
(21) Anmeldenummer: 93103821.0
(22) Anmeldetag: 10.03.1993
(51) Int. Cl.: H04B 10/10, H04B 10/22

(54) **Einrichtung zur leitungsungebundenen Signalübertragung mittels Licht**
Free space optical communication system
Dispositif pour la transmission de signaux optiques dans l'espace libre

(30) Priorität: 11.03.1992 DE 4207687
(43) Veröffentlichungstag der Anmeldung: 15.09.1993
(73) Patentinhaber: GRUNDIG E.M.V. Elektro-Mechanische Versuchsanstalt Max Grundig GmbH & Co. KG, D-90762 Fürth (DE)
(72) Erfinder: Rumland, Rainer, Dipl.-Ing., GRUNDIG E.M.V., W-8510 Fürth/Bay. (DE)

(56) Entgegenhaltungen:
- EP-A- 0 275 673
- WO-A-90/03072
- PATENT ABSTRACTS OF JAPAN vol. 10, no. 82 (E-392) 1986 & JP-A-60 229 435 (HITACHI)

## Beschreibung

Die Erfindung betrifft eine Einrichtung zur optischen, leitungsungebundenen Übertragung von frequenz- oder pulsmodulierten Signalen nach dem Oberbegriff des Anspruchs 1.

Diese Einrichtungen werden beispielsweise in Überwachungsanlagen mit ein oder mehreren Fernsehkameras, die entlang einer Fahrstrecke angeordnet sind, und einem oder mehreren Fernsehkameras zur Darstellung der aufgenommenen Bildsignale eingesetzt. Besonders die Überwachung von Bahnhöfen, insbesondere der Bahnsteige, vor der Einfahrt des Zuges bzw. vor und während der Abfahrt des Zuges stellt einen bedeutenden Anwendungsfall dar. Bei bekannten Anlagen werden zu diesem Zweck eine oder mehrere Fernsehkameras so angebracht, daß der gesamte Bahnsteig erfaßt wird. Mit diesen Kameras sind über leitungsgebundene Signalübertragungsstrecken Fernsehmonitore verbunden, auf denen die aufgenommenen Bilder dargestellt werden. Die Monitore sind fest an einem Ort installiert, der so gewählt ist, daß der Zugführer diese Monitore während des Aufenthaltes des Zuges einsehen kann. Vor der Abfahrt kann der Zugführer überprüfen, ob sich noch jemand im Einstiegsbereich des Zuges aufhält und zu einem späteren Zeitpunkt, ob alle Türen geschlossen sind.

Derartige Anlagen haben den Nachteil, daß die Monitore, die im Bahnhofsbereich installiert sind, in vielen Fällen beschädigt werden oder die Bildfläche mit Farbe übersprüht wird. Ein weiterer Nachteil bei fest installierten Monitoren ergibt sich dadurch, daß der Zugführer nur bei stehendem Zug den Bahnsteig überwachen kann. Personen, die sich während der Abfahrt des Zuges in eine Gefahrenzone begeben, können nicht erfaßt werden. Weiterhin kann es als nachteilig angesehen werden, daß die Übertragungsverbindungen fest installiert sind und somit nicht schnell und flexibel auf geänderte Anforderungen eingegangen werden kann.

Diese Nachteile können durch den Einsatz von leitungsungebundenen Übertragungsstrecken vermieden werden, da in diesem Fall die Monitore im Fahrzeug angebracht werden können. Die Installation von gerichteten Funkstrecken hat den Vorteil, flexibel bezüglich Veränderungen zu sein und und eine sichere Datenübertragung zu gewährleisten. Es entsteht jedoch, vor allem in Ballungsgebieten, das Problem freie Übertragungsfrequenzen zugeteilt zu bekommen.

Eine alternative Möglichkeit besteht in der Übertragung durch Licht, insbesondere Infrarotlicht. Eine derartige Anordnung ist in der deutschen Offenlegungsschrift DE 40 05 517 Al bekannt, die eine Vorrichtung zur wellenleiterlosen bidirektionalen Licht- oder Infrarotübertragung von Tondarbietungen, digitalen Signalen, Meßwerten oder bewegten Fernsehbildern beschreibt.
Derartige Infrarotübertragungssysteme, wie sie beispielsweise von der Firma YAGI mit den Modellen BC-058 oder PC-102 angeboten werden, übertragen frequenz- oder pulsmodulierte Signale mit einer Lichtsendeeinheit, der eine optische Linse vorgeschaltet ist, und einer Empfangseinheit, der ebenfalls eine bündelnde Optik vorangestellt ist. Diese Übertragungssysteme bieten die Vorteile, daß die angestrebte Flexibilität vorhanden ist, und es auch keine Probleme mit der Verfügbarkeit von freien Übertragungskanälen gibt.

Es besteht jedoch bei Anwendungen, in denen der Sender zwar stationär angeordnet, der Empfänger aber beweglich ist, der Nachteil, daß die Sendeleistung für Infrarotlicht nicht ausreichend groß ist, sobald empfangsseitig ein großer Empfangswinkel gewünscht wird.

Aus der japanischen Patentanmeldung JP 63234641 ist ein Übertragungssystem bekannt, bei dem zur Übertragung von Information ein lichtemittierendes Element vorgesehen ist, bei dem der Öffnungswinkel in Richtung der Bewegung einer mobilen Station groß ist, und das in dazu orthogonaler Richtung einen kleinen Öffnungswinkel aufweist. Auf diese Weise wird erreicht, daß selbst bei geringer Leistung des Lichtsendeelements im Empfangsbereich eine Lichtleistung zur Verfügung steht, die den sicheren Empfang der gesendeten Informationen gewährleistet.

Es gibt jedoch Situationen, bei denen das Fahrzeug beispielsweise durch eine Mulde fährt, und dadurch der Empfänger in vertikaler Richtung den Abstrahlbereich des Senders kurzzeitig verläßt uns ein Empfang der gesendeten Informationen nicht mehr möglich ist.

Aufgabe der Erfindung ist es deshalb, eine Anordnung anzugeben, bei der sichergestellt ist, daß die Empfangseinheit den Empfangsbereich auch unter ungünstigen Bedingungen nicht verläßt.

Diese Aufgabe wird ausgehend von den Merkmalen des Oberbegriffs des Anspruchs 1 durch die kennzeichnenden Merkmale des Anspruchs 1 gelöst.

Gemäß der Erfindung wird empfangsseitig eine Nachführeinheit vorgesehen, die die Abstrahlrichtung der Lichtsendeeinheit feststellt und dementsprechend die Lichtempfangseinheiten auf die Lichtsendeeinheiten ausrichtet.
Somit werden Abweichungen in der vertikalen Ausrichtung der optischen Anordnung ausgeglichen und die Übertragungssicherheit erhöht.

Die Nachführeinheit ist dabei derart ausgestaltet, daß senderseitig das frequenz- oder pulsmodulierte Nutzsignal durch Amplitudenmodulation bei geringem Modulationshub mit einem niederfrequenten Kennsignal beaufschlagt wird. Empfängerseitig ist eine Detektoreinheit angebracht, die aus einer Spalte bzw. vertikalen Anordnung von schmalbandigen, auf die Frequenz des Kennsignales abgestimmten Lichtdetektoren besteht. In der Detektoreinheit wird festgestellt, welcher der Lichtdetektoren ein Empfangsmaximum aufweist. Entsprechend der Lage dieses Lichtdetektors wird die Lichtempfangseinheit ausgerichtet.

Für die Ausrichtung eines Lichtempfängers sieht eine vorteilhafte Ausgestaltung der Erfindung vor, daß ein strahlumlenkendes optisches Element, das zur Nachführung des Lichtstrahles beweglich ausgeführt ist, zwischen die Sammeloptik und den Lichtempfänger eingebracht ist. Durch diese Anordnung wird zum einen die Ausrichtung gegenüber der direkten Ausrichtung der Empfangselemente erleichtert, zum anderen wird der Gesamtaufbau der Empfängeranordnung in ein kleineres Format gebracht.

Eine andere vorteilhafte Ausgestaltung der Erfindung sieht vor, daß der oder die Lichtsender bzw. -empfänger aus mehreren einzelnen Lichtquellen oder -detektoren bestehen, die zeilenförmig angeordnet sind. Durch eine derartige Anordnung wird die Lichtabstrahlleistung erhöht.

Eine Verbesserung des Übertragungsverhaltens der Übertragungseinrichtung ergibt sich, wenn eines oder beide Enden der zeilenförmigen Anordnung von Lichtempfänger und Lichtsender unter einem vorgebbaren Winkel gegenüber der übrigen Zeilenanordnung angebracht sind.
Auf diese Weise wird insbesondere im Nahbereich des Senders der Abstrahlwinkel vergrößert, so daß im Nahbereich eine erweiterte Empfangsmöglichkeit geboten wird.

Für die leitungsungebundene Signalübertragung mit Licht haben sich insbesondere die Frequenzen im nahen Infrarotbereich als vorteilhaft erwiesen, da sie auf Grund der kurzen Wellenlänge am wenigsten störanfällig sind.

Im folgenden wird die Erfindung an Hand der Figuren weiter erläutert.
Es zeigen:
Figur 1 die Darstellung der Abstrahlcharakteristik,
Figur 2 eine Anordnung zur Ausrichtung des Lichtempfängers,
Figur 3 eine Empfangseinheit mit Umlenkspiegel, und
Figur 4 eine Einsatzmöglichkeit am Beispiel eines Bahnhofes.

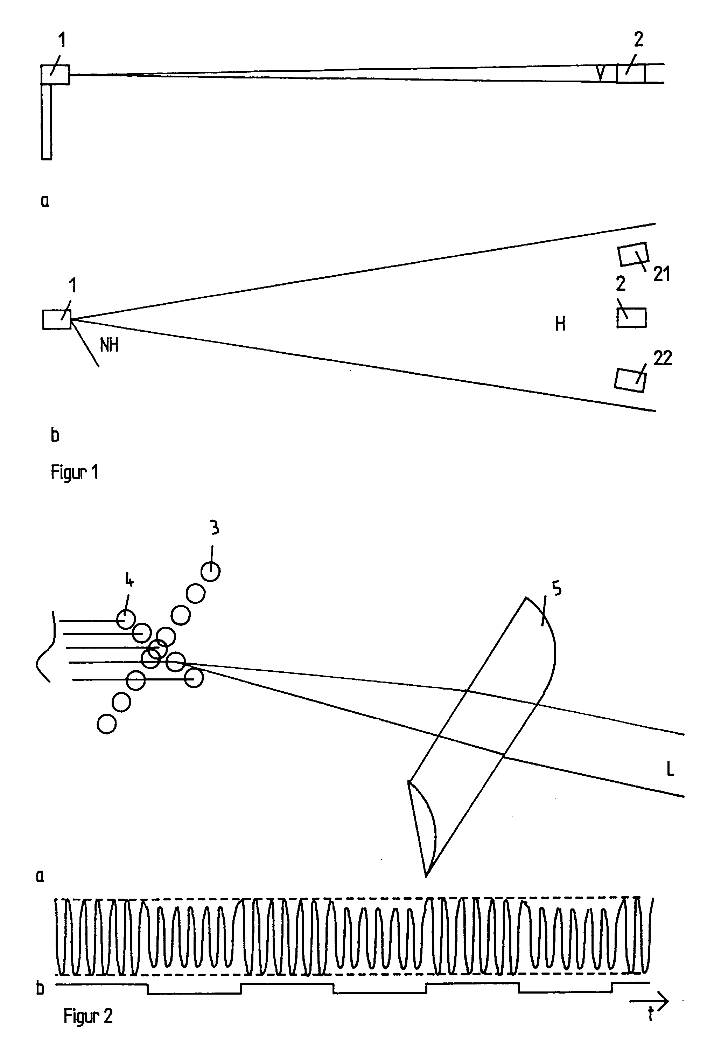

Die Figur 1a zeigt einen Lichtsender 1 und seine zugehörende Abstrahlcharakteristik V sowie einen Empfänger 2 in einer Seitenansicht. Durch den geringen Öffnungswinkel in vertikaler Richtung erhöht sich die Energiedichte der abgestrahlten Lichtleistung.
In Figur 1b ist eine Draufsicht der Anordnung nach Figur 1a gezeigt. Durch den breiten Abstrahlwinkel des Lichtsenders 1 ergibt sich eine weite Abstrahlcharakteristik H in horizontaler Richtung. Somit ist der Empfang mit dem Lichtempfänger 2 auch noch möglich, wenn dieser sich in den Stellungen 21 oder 22 befindet. In dieser Figur ist auch noch eine Nebenkeule NH der Abstrahlcharakteristik gezeigt, die sich ergibt, wenn ein Ende einer zeilenförmigen Anordnung der Lichtsender unter einem vorgebbaren Winkel angeordnet ist.
Die in Figur 1 gezeigten Abstrahlcharakteristiken gelten ebenso im umgekehrten Fall für den Empfänger. Als vorteilhaft haben sich für den Sender ein Abstrahlwinkel von 1,5° in vertikaler und etwa 10° in horizontaler Richtung erwiesen. Für den Empfänger ergeben sich vorzugsweise Empfangswinkel von 1,5° - bzw. 5° mit dynamischer Nachführung - in vertikaler Richtung und von 25° - bzw. 40° im Nahbereich unter Berücksichtigung der Nebenkeule - in horizontaler Richtung.

Figur 2a zeigt eine Empfängeranordnung mit einer Zylinderlinse 5, einem zeilenförmig angeordneten Empfängerelement 3 und den zur Korrektur benötigten Lichtdetektoren 4, die spaltenförmig angeordnet sind. Die Lichtdetektoren 4 bzw. die daran angeschlossenen Auswerteeinheiten sind sehr schmalbandig ausgelegt und auf die Frequenz eines Kennsignales, das sich aus der Hüllkurve nach Figur 2b ergibt, abgestimmt. Im dargestellten Fall trifft der durch die Linse 5 gebündelte Lichtstrahl L auf den ersten Detektor der Spalte der Lichtdetektoren 4 unterhalb der Empfängerzeile 3. Dieser Detektor empfängt also die größte Lichtmenge. Aus dieser Information wird in einer - in Figur 2 nicht dargestellten - Auswerteeinheit die Lage des Lichtstrahles bestimmt und die Linse 5 oder die Empfängeranordnung 3 und 4 solange nachgeregelt, bis das Empfangsmaximum in Höhe der Zeile 3 liegt.

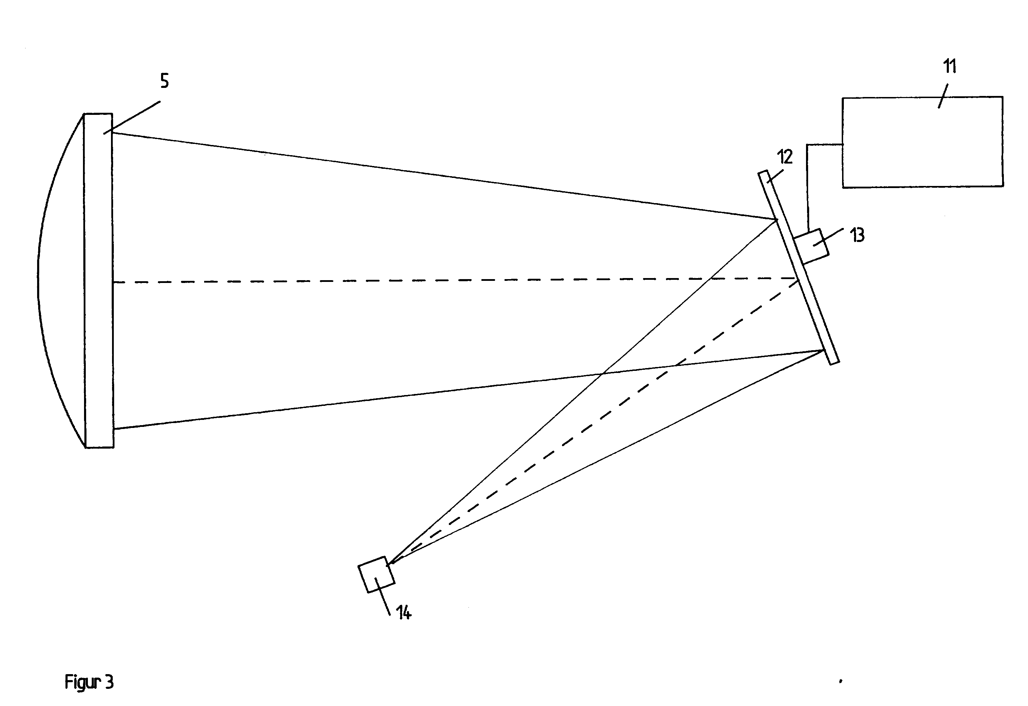

In Figur 3 ist eine Empfangseinheit mit einem Umlenkspiegel 12 dargestellt. Dieser ist an einer drehbaren Halterung 13 angeordnet, die von einer Auswerteeinheit 11 angesteuert wird. Der Lichtstrahl L tritt durch die Linse 5 und wird gebündelt, so daß er nach der Umlenkung über den Spiegel 12 in seinem Brennpunkt auf den Empfänger 14 trifft. Bei Abweichungen entsprechend Figur 2a kann eine Nachregelung des Spiegels 12 anstelle der Linse erfolgen.

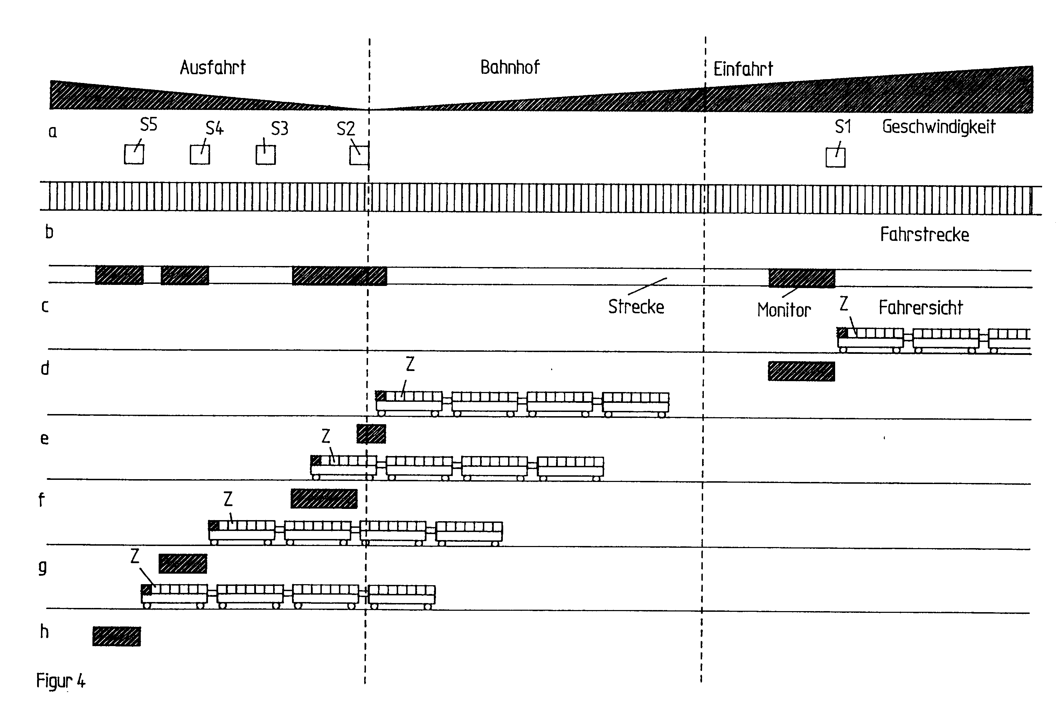

In den Figuren 4a bis 4h wird der Einsatz einer erfindungsgemäßen Überwachungsanlage am Beispiel eines Bahnhofes erläutert.
Figur 4a zeigt ein Geschwindigkeitsdiagramm für die Bereiche der Einfahrt des Bahnhofes, des Bahnhofes selbst und der Bahnhofsausfahrt. Das Diagramm zeigt die Situation aus der Sicht der Lokomotive, d.h. am Bahnhofsende wird die Geschwindigkeit Null sein, der Zug also stehen und von dort wieder beschleunigen.
In der Figur 4b ist die Anordnung der Infrarotsender S1 bis S5 beispielhaft dargestellt und in Figur 4c sind die Streckenabschnitte dargestellt, in denen der Zugführer auf die Strecke bzw. auf den Monitor sieht. Die Figuren 4d bis 4h zeigen die Fahrersicht noch einmal mit Angabe der Stellung des Zuges.
Bei der Einfahrt in den Bahnhof ist zunächst der erste Sender S1 angeordnet. Auf diese Weise kann der Zugführer bereits während der Abbremsphase in der Bahnhofseinfahrt kurzzeitig die Situation am Bahnsteig beobachten und die Einfahrtsgeschwindigkeit dieser Situation anpassen. Danach kann er sich auf die Strecke und den Bahnsteig konzentrieren. Nachdem der Zug angehalten hat, kann der Zugführer den Bahnsteig über Monitor beobachten; die entsprechenden Signale werden vom Sender S2 erhalten. Dies ist insbesondere vor dem Zeitpunkt der Abfahrt notwendig, um sich einen Überblick zu verschaffen, ob die Türen geschlossen sind und sich niemand mehr im Gefahrenbereich des Zuges aufhält. Auch während der Abfahrt kann der Zugführer noch die Situation am Bahnsteig bzw. im Vorbeifahren die Türen der Waggons überprüfen. Die Signale werden hierbei vom Sender S2 bzw. vom Sender S3 und den Sendern S4 und S5 erhalten. Durch eine derartige Überwachungsanlage an einem Bahnhof kann insbesondere die Sicherheit während des Einfahrens eines Zuges und bei der Abfahrt erhöht werden, da die Überwachung auf Monitor nicht mehr von fest installierten Monitoren am Bahnhof, die nur während des Anhaltens betrachtet werden können, abhängig ist.

## Patentansprüche

1. Einrichtung zur optischen, leitungsungebundenen Übertragung von frequenz- oder pulsmodulierten
Signalen mit einer oder mehreren stationären Lichtsendeeinheiten (1), mindestens einer mobilen Lichtempfangseinheit (2) und sender- und/oder empfangsseitig angeordneter bündelnder Optik (5), die derart ausgeführt ist, daß in der vertikalen Richtung ein kleinerer Öffnungswinkel als in der horizontalen Richtung entsteht,
**dadurch gekennzeichnet**, daß empfangsseitig eine Nachführeinrichtung vorgesehen ist, welche die Abstrahlrichtung der Lichtsendeeinheiten (1) feststellt und die Lichtempfangseinheiten (2) auf die Lichtsendeeinheiten (1) ausrichtet, indem senderseitig dem Nutzsignal durch Amplitudenmodulation ein Kennsignal mit geringem Modulationshub überlagert wird und empfängerseitig eine Detektoreinheit (3,4) angebracht ist, die aus einer Spalte und/oder Zeile von schmalbandigen, auf die Frequenz des Kennsignales abgestimmten Lichtdetektoren besteht,und festgestellt wird, welcher Lichtdetektor das Empfangsmaximum aufweist und die Empfangsoptik so nachgesteuert wird, daß der Lichtempfänger auf den Lichtsender ausgerichtet ist.

2. Einrichtung nach Anspruch 1, **dadurch gekennzeichnet**, daß
empfangsseitig ein strahlumlenkendes optisches Element zwischen eine Sammeloptik (5) und der Lichtempfangseinheit (2) angebracht ist und dieses Element zur Nachsteuerung der Empfangsoptik beweglich ausgeführt und mit einem Steuerantrieb verbunden ist.

3. Einrichtung nach Anspruch 1 oder 2,
**dadurch gekennzeichnet**, daß die Lichtsendeeinheit (1) und/oder die Lichtempfangseinheit (2) zur Erhöhung der abgestrahlten Lichtleistung bzw. der Empfangsempfindlichkeit aus mehreren einzelnen Lichtsendern bzw. Lichtempfängern besteht, die zeilenförmig angeordnet sind.

4. Einrichtung nach Anspruch 3, **dadurch gekennzeichnet**, daß an einem oder an beiden Enden der zeilenförmigen Anordnung zur Erzeugung einer Nebenabstrahlrichtung die Lichtsender bzw. Lichtempfänger unter einem vorgebbaren Winkel zu den Übrigen angeordnet sind.

5. Einrichtung nach einem oder mehreren der Ansprüche 1 bis 4, **dadurch gekennzeichnet**, daß die sender- bzw. empfangsseitig angeordnete bündelnde Optik (5) aus einer Zylinderlinse besteht.

6. Einrichtung nach einem oder mehreren der Ansprüche 1 bis 5, **dadurch gekennzeichnet**, daß das Spektrum des modulierten Lichtes im nahen Infrarotbereich liegt.

## Claims

1. Device for the optical, line-free transmission of frequency-modulated or pulse-modulated signals comprising one or more stationary light transmitting units (1), at least one mobile light receiving unit (2) and focusing optics (5) which are disposed at the transmitting end and/or receiving end and which are so designed that a smaller aperture angle is produced in the vertical direction than in the horizontal direction,
characterized in that, at the receiving end, a tracking device is provided which determines the beam direction of the light transmitting units (1) and aligns the light receiving units (2) with the light transmitting units (1) by superimposing a code signal having small modulation deviation on the useful signal by amplitude modulation at the transmitter end and by fitting a detector unit (3, 4) at the receiver end which comprises a column and/or row of narrow-band light detectors tuned to the frequency of the code signal and by determining which light detector has the maximum reception and by re-adjusting the receiving optics so that the light receiver is aligned with the light transmitter.

2. Device according to Claim 1,
characterized in that a beam deflecting optical element is fitted at the receiving end between collecting optics (5) and the light-receiving unit (2) and said element is of movable design for adjusting the receiving optics and is connected to a control drive.

3. Device according to Claim 1 or 2,
characterized in that, to increase the radiated light power or the reception sensitivity, the light-transmitting unit (1) and/or the light-receiving unit (2) comprise or comprises a plurality of individual light transmitters or light receivers which are arranged in row fashion.

4. Device according to Claim 3,
characterized in that, to produce a sideways radiation direction, the light transmitters or light receivers are arranged at a specified angle to the others at one or both ends of the row-like arrangement.

5. Device according to one or more of Claims 1 to 4,
characterized in that the focusing optics (5) arranged at the transmitter end or receiver end comprise a cylindrical lens.

6. Device according to one or more of Claims 1 to 5,
characterized in that the spectrum of the modulated light is in the near infrared range.

## Revendications

1. Dispositif pour la transmission optique, non guidée dans une ligne, de signaux modulés en fréquence ou modulés selon une modulation d'impulsions, comportant une ou plusieurs unités fixes d'émission de lumière (1), au moins une unité mobile de réception de lumière (2) et un système optique de focalisation (5) disposé sur le côté émission et/ou sur le côté réception, et qui est agencé de telle sorte qu'il apparaît un angle d'ouverture plus petit dans la direction horizontale que dans la direction verticale,
caractérisé en ce que, côté réception, il est prévu un dispositif d'asservissement, qui fixe la direction d'émission des unités d'émission de lumière (1) et oriente les unités de réception de lumière (2) sur les unités d'émission de lumière (1) par le fait que, côté émission, le signal caractéristique présentant une faible course de modulation est superposé au signal utile, au moyen d'une modulation d'amplitude et que, côté réception, il est prévu une unité de détection (3,4), qui est constitué par une colonne et/ou une ligne de détecteurs de lumière à bande étroite, réglés sur la fréquence du signal caractéristique, et que le détecteur de lumière qui fournit le maximum de réception, est déterminé et que le système optique de réception est commandé d'une manière asservie de telle sorte que le récepteur de lumière est orienté sur l'émetteur de lumière.

2. Dispositif selon la revendication 1, caractérisé en ce que, du côté réception, un élément optique, qui dévie le rayonnement, est disposé entre un système optique convergent (5) et l'unité de réception de lumière (2) et que cet élément est agencé de manière à être déplaçable pour réaliser la commande avec asservissement du système optique de réception et est relié à un dispositif d'entraînement de commande.

3. Dispositif selon la revendication 1 ou 2, caractérisé en ce que l'unité d'émission de lumière (1) et/ou l'unité de réception de lumière (2) sont constituées, en vue d'accroître la puissance lumineuse émise ou la sensibilité de réception, par plusieurs émetteurs de lumière ou récepteurs de lumière individuels, qui sont disposés suivant des lignes.

4. Dispositif selon la revendication 3, caractérisé en ce que les émetteurs de lumière ou les récepteurs de lumière sont disposés réciproquement sous un angle pouvant être prédéterminé, au niveau d'une ou des deux extrémités du dispositif en forme de ligne pour l'obtention d'une direction d'émission secondaire.

5. Dispositif selon l'une ou plusieurs des revendications 1 à 4, caractérisé en ce que le système optique de focalisation (5) disposé côté émission ou côté réception, est constitué par une lentille cylindrique.

6. Dispositif selon une ou plusieurs des revendications 1 à 5, caractérisé en ce que le spectre de la lumière modulée se situe dans la plage du proche infrarouge.
